# NEW EUROPEAN PATENT SPECIFICATION

(11) **EP 0 713 365 B2**
(45) Date of publication and mention of the opposition decision: **13.11.2002**
(45) Mention of the grant of the patent: 03.12.1997
(21) Application number: 94924817.3
(22) Date of filing: 28.07.1994
(51) Int. Cl.: A21D 2/26, A21D 13/06

(54) **RYE-FLOUR**
ROGGENMEHL
FARINE DE SEIGLE

(30) Priority: 10.08.1993 EP 93202347
(43) Date of publication of application: 29.05.1996
(73) Proprietor: CSM Nederland B.V., 1112 XE Diemen (NL)
(72) Inventor: WASSERMANN, Ludwig, D-89233 Neu-Ulm/Gerlenhofen (DE); EGLE, Hans, D-89284 Pfaffenhofen (DE); KNIEL, Bärbel, D-89231 Neu-Ulm (DE)
(74) Representative: Jorritsma, Ruurd
(86) International application number: EP9402508
(87) International publication number: WO95004462

(56) References cited:
- DE-A- 3 814 893
- GB-A- 862 811
- US-A- 3 077 408
- 'Reference Source 1993' 'Reference Source 1993' 1993 , SOSLAND PUBLISHING CO. , KANSAS 1993 , SOSLAND PUBLISHING CO. , KANSAS CITY, US. CITY, US. see page 20, column 2; table see page 20, column 2; table see page 32, column 1; table see page 32, column 1; table
- QUALITAS PLANTARUM- PLANT FOODS FOR HUMAN QUALITAS PLANTARUM- PLANT FOODS FOR HUMAN NUTRITION., NUTRITION., vol.32, no.2, 1983, THE HAGUE, NL. vol.32, no.2, 1983, THE HAGUE, NL. pages 185 - 196 pages 185 - 196 B. PEDERSEN & B.O. EGGUM, 'The influence B. PEDERSEN & B.O. EGGUM, 'The influence of milling on the nutritive value of flour of milling on the nutritive value of flour from cereal grains. I. Rye.' from cereal grains. I. Rye.'
- JOURNAL OF BIOCHEMICAL AND MICROBIOLOGICAL JOURNAL OF BIOCHEMICAL AND MICROBIOLOGICAL TECHNOLOGY AND ENGINEERING., TECHNOLOGY AND ENGINEERING., vol.1, no.1, 1959, UK vol.1, no.1, 1959, UK pages 77 - 98 pages 77 - 98 C.R. JONES ET AL. 'The separation of flour C.R. JONES ET AL. 'The separation of flour into fractions of different protein into fractions of different protein contents by means of air classification.' contents by means of air classification.'
- E. Hanssen und G. Florian, Mühle (1958), E. Hanssen und G. Florian, Mühle (1958), Heft 21, S. 276f Heft 21, S. 276f
- Werner Schäfer (Hrsg.), Brot in unserer Werner Schäfer (Hrsg.), Brot in unserer Zeit, Verlag Moritz Schäfer, Detmold 1966, Zeit, Verlag Moritz Schäfer, Detmold 1966, S. 125 - 128 S. 125 - 128
- C.R.Jones, Milling, November 4, 1960, S. C.R.Jones, Milling, November 4, 1960, S. 494 494
- H. Cleve, Die Getreidemühle 1960/6, S. 151 H. Cleve, Die Getreidemühle 1960/6, S. 151 -157 -157
- E. Drews und H. Reimers, Getreide und Mehl E. Drews und H. Reimers, Getreide und Mehl 11/12 1965, S. 129 -132 11/12 1965, S. 129 -132
- E. Drews und H. Reimers, Die Mühle, Heft E. Drews und H. Reimers, Die Mühle, Heft 40, Okt. 1970, S. 598f 40, Okt. 1970, S. 598f

## Description

Rye-containing bakery products, such as Rye-breads are well known. Those products are made from doughs, that contain Rye-flour. So far problems occurred during the production and handling of doughs, that had a too high content of Rye-flour. In particular doughs, wherein more that 50% of the flour consists of Rye-flour give problems because they are too sticky. Therefore, those doughs could not be produced in a continuous process, because of problems with the machinability of the doughs.
We have studied above problem in order to find a solution. This study has resulted in our invention.
According to this invention we have found a new Rye-flour, that can be used in high levels (even up to 100% on flour-component) in Rye-containing doughs, while the doughs are not sticky and can be produced in a continuous way.
Essential for our dough-composition is, that at least a considerable amount of a Rye-flour with a protein-content, below that of ordinary Rye-flour is present as part of the flour-component.

Although US 3,077,408 discloses airclassification from cereal flours, such as wheat, barley, corn, durum, rice and also rye, wherein it is revealed that the fines are enriched in proteins and that the coarse has a decreased protein content, nothing is disclosed about the problem of the stickiness of a dough, based on rye-flour and the problems resulting therefrom in a continuous process, because of the machinability of the dough. In example 7 it is only stated that the baking quality of a rye-flour is improved when a small amount of protein-enriched fines are removed. From the table in column 16, wherein amylograph peak Bu-values of the parent stock and of the fine- and the coarse-fraction are mentioned, it can be concluded that the coarse fraction and the parent stock have about the same α-amylase activity. Therefore, it was not recognized in this prior art and thus it cannot be derived from the above US patent what the impact will be of the application of a coarse rye flour fraction in a dough based on rye-flour, in particular with respect of the stickiness of the dough and its effects in a continuous, fully-machinable process.

Therefore, our invention concerns in the first place a new Rye-flour. This Rye-flour has a protein content of less than 7 wt%, preferably less than 5 wt%, while this flour simultaneously has a reduced dietary fibre content, compared with ordinary (natural) Rye-flour, while the particle size distribution of this Rye-flour is such that at least 20 wt% of the particles have a size above 65 µm and more than 94 wt% of the particles have a size of less than 130 µm.
The dietary fibre content (as measured according to the method of L Prosky, published in Journal of the Ass. of Off. Anal. Chemists, vol. 67, pages 1044-1052, 1984) of this Rye-flour is reduced, preferably with at least 10%, compared with ordinary (natural) Rye-flour.
Simultaneously, the α-amylase activity of this Rye-flour is also reduced, preferably with at least 10%, compared with ordinary (natural) Rye-flour. The α-amylase activity can be measured using a Brabender Amylograph, and is expressed in Brabender Units (= B.U.). The lower this value, the higher the α-amylase activity.

Although the new Rye-flour as defined above can be used as such as the flour-component of a Rye-bread dough, it is preferred to use a blend of an ordinary (natural) flour and our new Rye-flour.
Therefore, our invention also concerns flour blends, suitable for the production of Rye-containing products, wherein ordinary (natural) flour is blended with Rye-flour, according to the invention, so that the weight ratio ordinary (natural) flour: Rye-flour ranges from (95-5):(5-95).

The ordinary (natural) flour, used in those blends can be any flour, examples are flours derived from: wheat, oat, barley, corn, rice, sorghum, but also cereal like small grain flours, such as buck-wheat, quinoa or amaranth can be applied. It is of course also possible to blend our new Rye-flour with ordinary (natural) Rye-flour or with whole meal flour.

Application of our new Rye-flour or our new blends in doughs for bakery products leads to new doughs, that are also part of our invention. Therefore, our invention also concerns dough for bakery products, comprising the usual ingredients such as flour, salt and water, and optionally yeast, sour inoculum or leavening agents or other typical ingredients such as fats, sugar, eggs, gluten or other bread-improvers, wherein the flour applied is the flour defined above or the blend defined above.

Depending on the water content of the dough, doughs are obtained, which are suitable for Rye-containing bread or for Knäcke-brot. So, our invention also concerns dough for Rye-containing bread, comprising the above dough, wherein the water content of the dough is 45-60 wt% (on dough) and dough for Knäcke-brot, comprising the above dough, wherein the water content of the dough is 60-70 wt%, while yeast or leavening agent is absent.

The novel Rye-flour and the blends as defined above can also be used for the production of sour doughs. So, fermented sour doughs, comprising at least flour, water and a sour inoculum, wherein the flour at least partly consists of the Rye-flour according to the invention or the blend according to the invention are also part of the invention.

A preference, however, exists for fermented sour doughs with a limited water level (e.g. as disclosed in our Wo 94/00994). Therefore, fermented sour dough, comprising the above dough, wherein a sour inoculum is applied, while the water content of the dough is at least 25 wt%, preferably 25-32 wt% and fermented sour dough, wherein this fermented sour dough is mixed with enough of a pre-dried flour with a water content of less than 5 wt%, so that the water content of the mixture is 20-25 wt%, are also part of the invention.

Another aspect of our invention is laid in the fact that the use of our novel Rye-flours enables us to perform a continuous process for the production of Rye-containing products. Therefore, our invention also concerns a process for the production of baked Rye-containing products, wherein a dough is produced with the composition according to the invention in a continuous process, the dough is divided, moulded, fermented (if necessary) and baked. The fermentation is optional, as Knäcke-brot is produced without the presence of yeast or leavening agent. The products, obtained after baking of our doughs are also part of the invention.

The novel Rye-flours, disclosed above can be obtained as the coarse-fraction of an air classification process, performed on a milled, ordinary (natural) Rye-flour. Therefore, part of the invention is also a process for the air classification of a flour, wherein a Rye-flour with 7-12 wt% proteins is milled, so that the milled flour has a particle size distribution such that at least 98% has a size below 130 µm and at least 65 wt% has a size below 32 µm, the milled Rye-flour is subjected to air classification, applying a cut-point of 20-30 and an appropriate air speed, while separating a fine, protein-enriched Rye-flour with more than 12 wt% proteins having a particle size distribution such that at least 95 wt% has a particle size below 64 µm, while its α-amylase activity is increased with at least 10% compared with the starting Rye-flour in a yield of 20-40 wt% and a coarse, protein reduced Rye-flour with a protein content of less than 7 wt% having a particle size distribution such that at least 20 wt% has a size above 65 µm and more than 94 wt% has a size of less than 130 µm in a yield of 80-60 wt%. As a result of this process, a coarse, protein reduced fraction is obtained, which is the Rye-flour described above. The fine, protein-enriched Rye-flour that is also obtained, as a result of the air classification is also novel. Therefore, our invention also concerns with Rye-flour, wherein the Rye-flour has a protein content of more than 12 wt%, preferably more than 13 wt%, more preferably more than 15 wt%, which flour simultaneously has an increased dietary fibre content compared with ordinary (natural) Rye-flour.
The particle size distribution of this Rye-flour is typically such that at least 95 wt% has a particle size below 64 µm.
The dietary fibre content of this Rye-flour is increased, typically with at least 10% compared with ordinary (natural) Rye-flour. Simultaneously, the α-amylase activity is also increased, typically with at least 10% (based on BU-measurements).
This protein-enriched Rye-flour can also be applied as a blend with other flours. So, our invention also concerns flour blends, suitable for the production of wheat and/or Rye-containing products, wherein ordinary (natural) flour is blended with the protein-enriched Rye-flour so that the weight ratio ordinary (natural) flour: Rye-flour ranges from (0.1-99.9):(99.9-0.1); preferably from (5-95):(95:5).
Doughs for bakery products, comprising the usual ingredients such as flour, water, salt, yeast or sour inoculum or leavening agents and optionally typical ingredients such as: fats, sugar, eggs, gluten or other bread-improvers, wherein the flour applied is the above Rye-flour or flour-blend are also part of our new invention.
The novel, protein-enriched Rye-flour can be used for the production of baked wheat and/or Rye-containing products, in particular bread and rolls. A very suitable blend for this application comprises (99-90) wt% of ordinary (natural) flour and (1-10) wt% of the protein-enriched Rye-flour fraction of our invention.
Incorporation of these Rye-flours leads to products with improved taste, freshness, texture and flavour, compared with ordinary French bread.

### Examples

### I. Air classification of Rye-flour

The air classification was carried out using an Alpine (Augsburg) pilot plant air-classifier, provided with a Turboplex fine separator 50 ATP. The starting material was remilled rye flour according to table 1.
Dosage: 9.7 kg/hr.
Classifying wheel velocity: 11,000 RPM.
A cut point of 25 was applied.
A fine fraction was obtained in a yield of 20.1 wt% and a coarse fraction in a yield of 79.9 wt%. The properties of the fine and the coarse fractions are given in tables II and III.

**TABLE I**

| Remilled Rye-flour | |
|---|---|
| ash content | 0.97 % |
| protein content | 9.3 % |
| dietary fibre content | 8.5 % |
| amylogram max. viscosity | 510 BU |
| particle size distribution | |
| 98.6% below 128 µm | |
| 68.6% below 32 µm | |

**TABLE II**

| Air-classified coarse fraction | |
|---|---|
| ash content | 0.92 % |
| protein content | 4.85 % (as: N x 5.8) |
| dietary fibre content | 8.0 % |
| amylogram max. viscosity | 744 BU |
| particle size distribution | |
| 82% below 65 µm 98.5% below 130 µm | |

**TABLE III**

| Air-classified fine fraction | |
|---|---|
| ash content | 1.17 % |
| protein content | 13.2 % (as: N x 5.8) |
| dietary fibre content | 9.5 % |
| amylogram max. viscosity | 453 BU |
| particle size distribution | |
| 99% below 64 µm | |

### II Preparation of Rye-containing rolls

### II.1 Recipe

| | |
|---|---|
| 3350 g | Rye-flour coarse fraction of example I |
| 435 g | dry gluten |
| 369 g | dried sour dough |
| 330 g | coarsly ground malt grains (Rye) |
| 215 g | whole meal Rye-flour |
| 187 g | bread improver |
| 114 g | salt |
| 180 g | yeast |
| 3195 g | water |

### 11.2 The dough was prepared in a continuous process, applying a spiral mixer under the following conditions:

| | |
|---|---|
| slow speed | 6 min |
| higher speed | 1 min |
| dough temperature | 29.2°C |
| dough resting time | 15 min |

The dough was divided and moulded, so that dough pieces of 70 gram were obtained. The dough pieces were pre-fermented during 12 min and proofed during 60 min.

The fermented dough pieces were baked in a Stikken-oven
5 min at 250°C
12 min at 200°C
3 min at 230°C

The specific volume of the Rye-rolls was 5.6 ml/g. The dough did not show any stickiness.

### II.3 The dough stickiness was measured (Chen-Hoseney fixture) by adapting the optimal water absorption and holding time of the plunger in resp. +5% water and a holding time of 0.5 sec.

Two samples were tested. The results are shown below.

| Sample | protein | water % | mixing time min. | Dough stickiness (gram-force) |
|---|---|---|---|---|
| Remilled Rye flour | 9.3 | 70 | 2.5 | 29.9/35.6/32.8 |
| Coarse | 4.85 | 70 | 2.5 | 13.6/14.9/15.8 |

### III Preparation of French bread

### III.1 Recipe

| | |
|---|---|
| 2850 g | wheat flour Type 550 |
| 150 g | Rye-flour fine fraction |
| 75 g | yeast |
| 66 g | salt |
| 0.48 g | ascorbic acid |
| 2060 g | water |

### III.2 The dough was prepared, using a Diosna spiral mixer

| | |
|---|---|
| slow speed | 7 min |
| higher speed | 3.5 min |
| dough temperature | 24°C |
| dough resting time | 30 min |

Afer dividing and moulding pieces of dough of 360 g were obtained.
These pieces were proofed during 125 min.
The proofed dough pieces were baked: 25 min at 230°C.
The specific volume of the bread was 4.65 ml/g. The freshness of the bread was excellent.

### IV Preparation of a multi-grain bread

### IV.1 Recipe of the dough

| | |
|---|---|
| 2254 g | wheat flour |
| 1272 g | dried sour dough |
| 451 g | rye meal, coarse |
| 173 g | rye fine fraction |
| 1017 g | other cereals (p.e. corn, barley) |
| 231 g | linseed |
| 231 g | soy bean grits |
| 127 g | salt |
| 24 g | bread improver |
| 116 g | yeast |
| 4104 g | water |
| 10000 g | dough |

### IV.2 The dough was prepared, using a Diosna spirial mixer SP24F.

| | |
|---|---|
| slow speed | 10 min |
| higher speed | 3,5 min |
| dough temperature | 27°C |
| dough resting time | 30 min |

After dividing and moulding pieces of dough of 900 g were obtained. These pieces were proofed during 60 min. The proofed dough pieces were baked 60 min at 260°C falling down to 210°C.

The specific volume of the bread was 2,3 ml/g. The freshness of the bread was excellent. The softness of the crumb was significantly higher than the softness of a bread without rye fine fraction (123 units: 98 units). After six days the crumb of the above bread showed an improved softness and freshness (50 units: 36 units).

## Claims

1. Rye-flour, wherein the Rye-flour has a protein content of less than 7 wt%, preferably less than 5 wt%, which flour simultaneously has a reduced dietary fibre content, compared with ordinary (natural) Rye-flour and wherein the flour has a particle size distribution such that at least 20 wt% of the particles have a size above 65 µm and more than 94 wt% of the particles have a size of less than 130 µm.

2. Rye-flour, according to claim 1, wherein the dietary fibre content is such that it is reduced with at least 10%, compared with ordinary (natural) Rye-flour.

3. Rye-flour, according to claims 1-2, wherein the α-amylase activity is reduced, preferably with at least 10% compared with ordinary (natural) Rye-flour.

4. Flour blend, suitable for the production of Rye-containing products, wherein ordinary (natural) flour is blended with Rye-flour, according to claims 1-3, so that the weight ratio ordinary (natural) flour: Rye-flour ranges from (95-5):(5-95).

5. Dough for bakery products, comprising the usual ingredients such as flour, salt and water, and optionally yeast, sour inoculum or leavening agents, or other typical ingredients, such as fats, sugar, eggs, gluten or other bread-improvers, wherein the flour applied is the flour of claims 1-3 or the blend of claim 4.

6. Dough for Rye-containing bread, comprising the dough according to claim 5, wherein the water content of the dough is 45-60 wt% (on dough).

7. Dough for Knäcke-brot, comprising the dough according to claim 5, wherein the water content of the dough is 60-70 wt%, while yeast or leavening agent is absent.

8. Fermented sour-dough, comprising at least flour, water and a sour inoculum, wherein the flour at least partly consists of the Rye-flour according to claims 1-3, or the blend of claim 4.

9. Fermented sour dough according to claim 8, wherein a sour inoculum is applied, while the water content of the dough is at least 25 wt%, preferably 25-32 wt%.

10. Fermented sour dough according to claim 8, wherein the dough according to claim 9 is mixed with enough of a pre-dried flour with a water content of less than 5 wt%, so that the water content of the mixture is 20-25 wt%.

11. Process for the production of baked Rye-containing products, wherein a dough is produced with the composition according to claims 5-10 in a continuous process, the dough is divided, moulded, fermented (if necessary) and baked.

12. Baked rye-containing products, obtainable after baking of the dough according to claims 5-10.

13. Process for the air classification of a flour, wherein a Rye-flour with 7-12 wt% proteins is milled, so that the milled flour has a particle size distribution such that at least 98% has a size below 130 µm and at least 65 wt% has a size below 32 µm, the milled Rye-flour is subjected to air classification, applying a cut-point of 20-30 and an appropiate air speed, while separating a fine, protein-enriched Rye-flour with more than 12 wt% proteins having a particle size-distribution such that at least 95 wt% has a particle size below 64 µm, while its α-amylase activity is increased with at least 10%, compared with the starting Rye-flour in a yield of 20-40 wt% and a coarse, protein reduced Rye-flour with a protein content of less than 7 wt% having a particle size distribution such that at least 20 wt% has a size above 65 µm and more than 94 wt% has a size of less than 130 µm in a yield of 80-60 wt%

## Patentansprüche

1. Roggenmehl, worin das Roggenmehl einen Proteingehalt von weniger als 7 Gew.%, vorzugsweise weniger als 5 Gew.%, aufweist, welches Mehl gleichzeitig einen verringerten Nahrungsfasergehalt, verglichen mit einem üblichem (natürlichem) Roggenmehl hat, und worin das Mehl eine solche Teilchengrößenverteilung aufweist, daß mindestens 20% der Teilchen eine Größe über 65 µm und mehr als 94 Gew.% der Teilchen eine Größe von weniger als 130 µm aufweisen.

2. Roggenmehl nach Anspruch 1, worin der Nahrungsfasergehalt so bemessen ist, daß er um mindestens 10%, verglichen mit üblichem (natürlichem) Roggenmehl, verringert ist.

3. Roggenmehl nach den Ansprüchen 1 bis 2, worin die α-Amylaseaktivität, verglichen mit üblichem (natürlichem) Roggenmehl, verringert ist, vorzugsweise um mindestens 10%.

4. Mehlgemisch, das zur Herstellung roggenhaltiger Produkte geeignet ist, worin übliches (natürliches) Mehl mit Roggenmehl gemäß den Ansprüchen 1 bis 3 gemischt ist, so daß das Gewichtsverhältnis von üblichem (natürlichem) Mehl zu Roggenmehl von 95-5 : 5-95 reicht.

5. Teig für Backwaren, umfassend die üblichen Bestandteile, wie Mehl, Salz und Wasser, und fakultativ Hefe, saure Impfkultur oder Treibmittel, und andere übliche Bestandteile, wie Fette, Zucker, Eier, Gluten oder andere Brotverbesserer, worin das verwendete Mehl das Mehl der Ansprüche 1 bis 3 oder das Gemisch nach Anspruch 4 ist.

6. Teig für roggenhaltiges Brot, umfassend den Teig gemäß Anspruch 5, worin der Wassergehalt des Teiges 45-60 Gew.% (bezogen auf den Teig) beträgt.

7. Teig für Knäckebrot, umfassend den Teig gemäß Anspruch 5, worin der Wassergehalt des Teiges 60-70 Gew.% beträgt, während Hefe oder Treibmittel fehlt.

8. Fermentierter Sauerteig, umfassend mindestens Mehl, Wasser und eine saure Impfkultur, worin das Mehl mindestens teilweise aus dem Roggenmehl gemäß den Ansprüchen 1 bis 3 oder dem Gemisch nach Anspruch 4 besteht.

9. Fermentierter Sauerteig nach Anspruch 8, worin eine saure Impfkultur verwendet wird, während der Wassergehalt des Teiges mindestens 25 Gew.%, vorzugsweise 25-32 Gew.%, beträgt.

10. Fermentierter Sauerteig nach Anspruch 8, worin der Teig gemäß Anspruch 9 mit einem ausreichend vorgetrocknetem Mehl mit einem Wassergehalt von weniger als 5 Gew.% gemischt ist, so daß der Wassergehalt der Mischung 20-25 Gew.% beträgt.

11. Verfahren zur Herstellung gebackener roggenhaltiger Produkte, worin der Teig mit der Zusammensetzung gemäß den Ansprüchen 5 bis 10 in einem kontinuierlichen Verfahren hergestellt wird, der Teig unterteilt, geformt, fermentiert (falls nötig) und gebacken wird.

12. Gebackene roggenhaltige Produkte, erhältlich nach Backen des Teiges gemäß den Ansprüchen 5 bis 10.

13. Verfahren zum Windsichten eines Mehles, bei dem ein Roggenmehl mit 7-12 Gew.% Proteinen gemahlen wird, so daß das gemahlene Mehl eine solche Teilchengrößenverteilung aufweist, daß mindestens 98% eine Teilchengröße unter 130 µm und mindestens 65 Gew.% eine Größe unter 32 µm haben, das gemahlene Roggenmehl einem Windsichten unterworfen wird, wobei eine Kornscheide von 20-30 und eine angemessene Windgeschwindigkeit angewendet werden, wobei ein feines, proteinangereichertes Roggenmehl mit mehr als 12 Gew.% Proteinen und einer solchen Teilchengrößenverteilung, daß mindestens 95 Gew.% eine Teilchengröße unter 64 µm haben, während seine α-Amylaseaktivität um mindestens 10%, verglichen mit dem Ausgarigsroggenmehl, erhöht ist, in einer Ausbeute von 20-40 Gew.% und ein grobes, proteinreduziertes Roggenmehl mit einem Proteingehalt von weniger als 7 Gew.% und einer solchen Teilchengrößenverteilung, daß mindestens-20 Gew.% eine Teilchengröße über 65 µm, und mehr als 94 Gew.% eine Größe unter 130 µm in einer Ausbeute von 80-60 Gew.% abgetrennt werden.

## Revendications

1. Farine de seigle, dans laquelle la farine de seigle a une teneur en protéines de moins de 7% en poids, de préférence de moins de 5% en poids, cette farine ayant simultanément une teneur réduite en fibres alimentaires, en comparaison avec une farine de seigle ordinaire (naturelle) et dans laquelle la farine a une distribution granulométrique telle qu'au moins 20% en poids des particules ont une dimension au dessus de 65 µm et plus de 94% en poids des particules ont une dimension de moins de 130 µm.

2. Farine de seigle selon la revendication 1, dans laquelle la teneur en fibres alimentaires est telle qu'elle est réduite d'au moins 10%, en comparaison avec une farine de seigle ordinaire (naturelle).

3. Farine de seigle selon les revendications 1 et 2, dans laquelle l'activité alpha-amylase est réduite, de préférence d'au moins 10% en comparaison avec une farine de seigle ordinaire (naturelle).

4. Mélange de farines, approprié à la production de produits contenant du seigle, dans lequel on mélange une farine ordinaire (naturelle) avec une farine de seigle, selon les revendications 1 à 3, de façon que le rapport pondéral farine ordinaire (naturelle) : farine de seigle se situe dans la gamme de (95-5):(5:95).

5. Pâte pour produits boulangers comprenant les ingrédients habituels tels que la farine, le sel et l'eau et, facultativement, de la levure, un inoculum acide ou des agents de levage, ou d'autres ingrédients typiques comme les graisses, le sucre, les oeufs, le gluten ou d'autres agents d'amélioration du pain, dans laquelle la farine utilisée est la farine des revendications 1 à 3 ou le mélange de farines de la revendication 4.

6. Pâte pour pain contenant du seigle, comprenant la pâte selon la revendication 5, dans laquelle la teneur en eau de la pâte est de 45 à 60% en poids (par rapport à la pâte).

7. Pâte pour pain suédois comprenant la pâte selon la revendication 5, dans laquelle la teneur en eau de la pâte est de 60 à 70% en poids, tandis que la levure ou l'agent de levage est absent.

8. Pâte acide fermentée, comprenant au moins de la farine, de l'eau et un inoculum acide, dans laquelle la farine consiste au moins partiellement en farine de seigle selon les revendications 1 à 3 ou le mélange de la revendication 4.

9. Pâte acide fermentée selon la revendication 8, dans laquelle on utilise un inoculum acide, tandis que la teneur en eau de la pâte est d'au moins 25% en poids, de préférence 25 à 32% en poids.

10. Pâte acide fermentée selon la revendication 8, dans laquelle on mélange la pâte selon la revendication 9 avec assez d'une farine pré-séchée ayant une teneur en eau de moins de 5% en poids, de façon que la teneur en eau du mélange est de 20 à 25% en poids.

11. Procédé de production de produits cuits contenant du seigle, dans lequel on produit une pâte avec la composition selon les revendications 5 à 10, en un procédé en continu, la pâte étant divisée, moulée, fermentée (si nécessaire) et cuite.

12. Produits cuits contenant du seigle qu'on obtient après cuisson de la pâte selon les revendications 5 à 10.

13. Procédé de classification à l'air d'une farine, dans lequel on broie une farine de seigle avec 7 à 12% en poids de protéines, de façon que la farine broyée ait une distribution particulaire telle qu'au moins 98% ont une dimension en dessous de 130 µm et au moins 65% en poids une dimension en dessous de 32 µm, la farine de seigle broyée étant soumise à une classification à l'air, en appliquant une pointe de coupe de 20 à 30 et une vitesse d'air appropriée, tout en séparant une farine de seigle enrichie en protéines fine de plus de 12% en poids de protéines ayant une distribution particulaire telle qu'au moins 95% en poids ont une dimension particulaire en dessous de 64 µm, tandis que son activité alpha-amylase est augmentée d'au moins 10%, en comparaison avec la farine de seigle de départ en un rendement de 20 à 40% en poids et une farine de seigle réduite en protéines grossière ayant une teneur en protéines de moins de 7% en poids avec une distribution granulométrique telle qu'au moins 20% en poids ont une dimension au dessus de 65 µm et plus de 94% en poids une dimension de moins de 130 µm en un rendement de 80 à 60% en poids.
